# EUROPÄISCHE PATENTSCHRIFT

(11) **EP 2 928 754 B1**
(45) Veröffentlichungstag und Bekanntmachung des Hinweises auf die Patenterteilung: **03.05.2017**
(21) Anmeldenummer: 13771064.6
(22) Anmeldetag: 23.09.2013
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR VÉHICULE À MOTEUR

(30) Priorität: 06.12.2012 DE 102012111890
(43) Veröffentlichungstag der Anmeldung: 14.10.2015
(73) Patentinhaber: ThyssenKrupp Presta Aktiengesellschaft, 9492 Eschen (LI); ThyssenKrupp AG, 45143 Essen (DE)
(72) Erfinder: GSTÖHL, Eric, CH-9492 Eschen (CH); HAUSKNECHT, Sven, A-6850 Dornbirn (AT); LOOS, Stefan-Hermann, 9435 Heerbrugg (CH); SENN, Mathias, CH-9472 Grabs (CH)
(74) Vertreter: ThyssenKrupp Intellectual Property GmbH
(86) Internationale Anmeldenummer: PCT/EP2013/002854
(87) Internationale Veröffentlichungsnummer: WO 2014/086439

(56) Entgegenhaltungen:
- EP-A1- 0 633 180
- EP-B1- 1 083 109
- FR-A1- 2 708 551
- FR-A1- 2 795 035

## Beschreibung

Die Erfindung bezieht sich auf eine Lenksäule für ein Kraftfahrzeug mit einer drehbar gelagerten Lenkspindel und einer Stelleinheit, die einen an ein lenkradseitiges Ende der Lenkspindel anschließenden Abschnitt der Lenkspindel trägt und die im geöffneten Zustand einer Feststellvorrichtung zur Verstellung der Lenksäule in eine Verstellrichtung einer Höhen- oder Neigungsverstellung gegenüber einer Konsoleneinheit um eine Schwenkachse verschwenkbar ist und deren Verschwenkung gegenüber der Konsoleneinheit um die Schwenkachse im geschlossenen Zustand der Feststellvorrichtung festgestellt ist, wobei die Schwenkachse von einem fahrzeugfest montierbaren Achsbolzen gebildet wird, der ein erstes und eine zweites Langloch der Stelleinheit durchsetzt, und wobei im Fall eines Fahrzeugcrashes die Stelleinheit gegenüber dem Achsbolzen unter Verschiebung des Achsbolzens in den Langlöchern verschiebbar ist.

Durch verstellbare Lenksäulen wird eine Anpassung der Position des Lenkrades an die Sitzposition des Fahrers ermöglicht. Meist sind Lenksäulen heutzutage nicht nur in der Höhe oder Neigung verstellbar sondern auch in der Länge.

Im Falle eines Fahrzeugcrashs soll sich eine Lenksäule unter einer entsprechenden Energieabsorption zusammenschieben lassen. Es ist hierfür bekannt, zwei in eine Verschieberichtung gegeneinander verschiebbare Teile vorzusehen, wobei die Verschieberichtung im Allgemeinen parallel zum an das lenkradseitige Ende anschließenden Abschnitt der Lenkspindel liegt, welche ihrerseits teleskopierbar ausgebildet ist. Zwischen den beiden im Crashfall gegeneinander verschiebbaren Teilen wirkt mindestens ein der Verschiebung eine Kraft entgegensetzendes Element, um eine vorgegebene Energieabsorption zu erreichen. Beispielsweise können Energieabsorptionsteile vorgesehen sein, welche von U-förmig umgebogenen Blechstreifen gebildet werden, wobei bei der Verschiebung der beiden Teilen am Blechstreifen Biegearbeit geleistet wird. Anstelle von Biegestreifen können auch Aufreißstreifen vorgesehen sein. Derartige Lenksäulen gehen beispielsweise aus der EP 1 479 593 B1, EP 1 707 471 A1 und EP 1 187 752 B1 hervor.

Aus der EP 0 479 455 A2 geht eine Lenksäule hervor, bei der eine die Lenkspindel tragende Einheit über Befestigungsbolzen mit einem fahrzeugfesten Teil verbunden ist. Die Befestigungsbolzen durchsetzen in der Einheit ausgebildete Langlöcher, wodurch im Crashfall eine Verschiebung der Einheit gegenüber dem fahrzeugfesten Teil ermöglicht wird. In einer Ausgangsstellung durchsetzen die Befestigungsbolzen jeweils einen vergrößerten Abschnitt im jeweiligen Langloch. Im Crashfall wird der daran anschließende, eine geringere Breite aufweisende Abschnitt des Langlochs sukzessive vom Befestigungsbolzen aufgeweitet, wodurch eine Energieabsorption erreicht wird. Ähnliche Lenksäulen sind aus der US 3,769,851 und US 6,378,903 B1 bekannt.

Eine Lenksäule der eingangs genannten Art geht aus der EP 1 083 109 B1 hervor. Auch hier werden im Crashfall die vom Achsbolzen durchsetzten Langlöcher bei der Verschiebung des Achsbolzens in den Langlöchern unter Energieabsorption aufgeweitet. Die Konsoleneinheit, gegenüber welcher die die Lenkspindel drehbar lagernde Stelleinheit im geschlossenen Zustand der Feststellvorrichtung fixiert ist, löst sich hierbei im Crashfall von einem fahrzeugfesten Teil, an welchem die Konsoleneinheit montiert ist.

Ein Nachteil von Lenksäulen, bei denen die Energie zwischen dem Achsbolzen und den ersten und zweiten von diesem durchsetzten Langlöchern absorbiert wird, ist es, dass mit hoher Präzision sichergestellt werden muss, dass die Bedingungen zwischen Achsbolzen und erstem Langloch und zwischen Achsbolzen und zweitem Langloch genau gleich sind. Andernfalls kann es zu einem Schiefziehen der Lenksäule im Crashfall kommen. Eine ordnungsgemäße Energieabsorption ist dann nicht mehr gegeben.

Die WO 2010/069448 A1 zeigt eine Lenksäule mit ersten und zweiten Bolzen, die jeweils ein Langloch durchsetzen, wobei die beiden Langlöcher in unterschiedlichen Abständen vom lenkradseitigen Ende der Lenkspindel angeordnet sind. Durch unterschiedliche Neigungen der beiden Langlöcher kann bei der Verschiebung der Bolzen in den Langlöchern eine gleichzeitige Längen- und Höhenverstellung der Lenksäule erreicht werden. Im Anschluss an den Verstellbereich der Langlöcher weisen diese einen Energieabsorptionsabschnitt auf, wobei bei einer Verschiebung des Bolzens durch den Energieabsorptionsabschnitt im Crashfall eine Energieabsorption auftritt.

Eine ähnliche, gleichzeitig längen- und höhenverstellbare Lenksäule geht aus der CN 102069840 A hervor. Die Energieabsorption im Crashfall erfolgt hier aber zwischen zwei Säulenteilen der Lenksäule.

Bei der aus der WO 2008/083811 A1 bekannten Lenksäule erfolgt im Crashfall eine Energieabsorption zwischen einer die Lenkspindel drehbar lagernden Manteleinheit und der Stelleinheit, welche im geöffneten Zustand der Feststellvorrichtung gegenüber der Konsoleneinheit um eine Schwenkachse verschwenkbar ist.

Die US 7,874,228 B2 zeigt eine Ausbildung einer Schwenkachse zur Verschwenkung einer die Lenkspindel drehbar lagernden Stelleinheit gegenüber einer Konsoleneinheit im geöffneten Zustand einer Feststellvorrichtung, um eine Höhenverstellung der Lenksäule zu ermöglichen. Es sind hierbei zwei Schwenkbolzen vorgesehen, die Langlöcher in der Stelleinheit durchsetzen. Im geöffneten Zustand der Feststellvorrichtung können die Schwenkbolzen in den Langlöchern verschoben werden, wodurch eine Längenverstellung der Stelleinheit ermöglicht wird.

Aus der FR 2 795 035 A1 ist eine Befestigungseinrichtung für eine Lenksäule bekannt, bei der ein Bolzen ein erstes und ein zweites Langloch der Stelleinheit durchsetzt, und wobei im Fall eines Fahrzeugcrashes die Stelleinheit gegenüber dem Bolzen unter Verschiebung des Bolzens in den Langlöchern verschiebbar ist. In einem bezogen auf die Richtung der Schwenkachse zwischen dem ersten und dem zweiten Langloch liegenden Bereich ist ein Energieabsorptionsteil angeordnet, mit dem der Bolzen bei seiner Verschiebung in den Langlöchern unter plastischer Verformung des Energieabsorptionsteils durch Ausübung von Druck auf das Energieabsorptionsteil und Verdrängung von Material des Energieabsorptionsteils zusammenwirkt. Der Bolzen ist jedoch kein Achsbolzen, um den die Konsole verschwenkbar ist. Das Energieabsorptionsteil ist als umgeformter Abschnitt der Stelleinheit ausgebildet. Nachteilig daran ist, dass eine Anpassung an die jeweils gewünschten Energieabsorptionsverhältnisse relativ aufwendig ist.

Aufgabe der Erfindung ist es, eine Lenksäule der eingangs genannten Art mit einer Energieabsorptionseinrichtung für den Crashfall bereitzustellen, welche einfach montierbar ist und in einfacher Weise an die jeweils gewünschten Energieabsorptionsverhältnisse angepasst werden kann. Erfindungsgemäß gelingt dies durch eine Lenksäule mit den Merkmalen des Anspruchs 1.

Bei der Lenksäule gemäß der Erfindung ist in einem Bereich, der bezogen auf die Richtung der Schwenkachse für die Verschwenkung der Stelleinheit gegenüber der Konsoleneinheit zwischen dem ersten und dem zweiten Langloch liegt, ein Energieabsorptionsteil angeordnet. Mit diesem Energieabsorptionsteil wirkt der im Montagezustand der Lenksäule fahrzeugfest (=starr mit dem Chassis des Kraftfahrzeugs verbunden) montierte Achsbolzen zusammen, wenn die Stelleinheit im Falle eines Fahrzeugcrashs gegenüber dem Achsbolzen und damit der Achsbolzen in den ersten und zweiten Langlöchern verschoben wird. Hierbei wird das Energieabsorptionsteil vom Achsbolzen plastisch verformt, wobei vom Achsbolzen Druck auf das Energieabsorptionsteil ausgeübt wird und Material des Energieabsorptionsteils verdrängt wird.

Dadurch kann in einfacher und kontrollierter Weise eine Energieabsorption für den Crashfall bei einer Verschiebung der Stelleinheit gegenüber dem fahrzeugfest montierten Achsbolzen bereitgestellt werden. Es wird hierbei eine sehr gute Führung der Stelleinheit ermöglicht, da die Führung des Achsbolzens in den ersten und zweiten Langlöchern nicht beeinträchtigt wird. Die ersten und zweiten Langlöcher bleiben bei einer Verschiebung des Achsbolzens in Längsrichtung derselben unverformt.

Erfindungsgemäß ist das Energieabsorptionsteil in einer Vertiefung in der Stelleinheit angeordnet ist. Diese Vertiefung ist im zwischen dem ersten und dem zweiten Langloch (bezogen auf die axiale Richtung des Achsbolzens) liegenden Bereich der Stelleinheit ausgebildet. Dadurch ist es möglich, dass das Energieabsorptionsteil von einem eigenen Bauteil gebildet wird, welches in die Vertiefung eingesetzt wird und im Montagezustand der Lenksäule gegenüber der Stelleinheit unverschiebbar an dieser festgelegt ist.

Das Energieabsorptionsteil besteht vorzugsweise aus Metall, insbesondere bevorzugt aus einem Stahl. Es ist aber auch denkbar und möglich, das Energieabsorptionsteil aus einem Kunststoff oder einem Elastomer auszubilden.

Zwischen dem Achsbolzen und den in Längsrichtung der Langlöcher sich erstreckenden Rändern der Langlöcher, welche die Langlöcher in der Breite begrenzen, ist günstigerweise ein Schiebesitz ausgebildet. Es liegt also ein geringes Spiel zwischen dem Achsbolzen und den die Langlöcher in ihre Längsrichtung begrenzenden Rändern vor.

Im Montagezustand bzw. im Normalbetrieb, solange noch kein Fahrzeugcrash aufgetreten ist, befindet sich der Achsbolzen relativ zu den Langlöchern in einer Ausgangsstellung und das Stellteil ist gegen eine Verschiebung gegenüber dem Achsbolzen, bei welcher sich dieser in den Langlöchern verschieben würde, unverschiebbar gehalten. Günstigerweise ist diese Halterung spielfrei oder weist ein nur geringes Spiel auf (welches zumindest weniger als ein Zehntel der Längserstreckung der Langlöcher beträgt).

Wenn auf das lenkradseitige Ende der Lenkspindel, bei sich in seiner Ausgangsstellung befindendem Achsbolzen, eine Kraft wirkt, die in Längsrichtung der Längsachse des an das lenkradseitige Ende der Lenkspindel anschließenden Abschnitts der Lenkspindel gerichtet ist und im Sinne eines Zusammendrückens der Lenksäule wirkt (also zur Fahrzeugfront gerichtet ist), so verbleibt der Achsbolzen günstigerweise bis zu einem Schwellenwert (=Grenzwert) dieser Kraft (spielfrei oder mit geringem Spiel von weniger als einem Zehntel der Längserstreckung der Langlöcher) relativ zu den Langlöchern unverschiebbar und somit in seiner Ausgangsstellung. Dieser Schwellenwert ist je nach Fahrzeug speziell einzustellen oder durch die Konstruktion darzustellen. Er beträgt vorteilhafterweise mehr als 700 N. Vorzugsweise muss das System jedoch auch für einen Schwellenwert unterhalb von 2000 N einstellbar sein. Bei Überschreiten dieses Schwellenwertes verschiebt sich dann die Stelleinheit gegenüber dem Achsbolzen, sodass sich der Achsbolzen relativ zu den Langlöchern verschiebt (wobei er sich den näher beim lenkradseitigen Ende der Lenkspindel liegenden Enden der Langlöcher annähert). Hierbei wird durch das Zusammenwirken mit dem Energieabsorptionsteil Energie absorbiert.

Günstigerweise setzt die Energieabsorption bei der Verschiebung des Achsbolzens ausgehend von seiner Ausgangsstellung zumindest innerhalb einer Verschiebestrecke ein, welche weniger als ein Fünftel der gesamten möglichen Verschiebestrecke des Achsbolzens in den Langlöchern beträgt. Vorzugsweise beginnt das Zusammenwirken des Achsbolzens mit dem Energieabsorptionsteil und damit die Energieabsorption unmittelbar bei Beginn der Verschiebung des Achsbolzens aus seiner Ausgangsstellung.

Eine vorteilhafte Ausführungsform der Erfindung sieht vor, dass der Achsbolzen bis zum Schwellenwert der Kraft, oberhalb von welchem die Verschiebung des Achsbolzens in den Langlöchern einsetzt, durch das Energieabsorptionsteil in seiner Ausgangsstellung, also unverschiebbar gegenüber den Langlöchern und damit gegenüber der Stelleinheit gehalten ist.

Vorteilhafterweise befindet sich der Achsbolzen in seiner Ausgangsstellung im Bereich der Enden der Langlöcher, die vom lenkradseitigen Ende der Lenkspindel abgewandt sind, also weiter entfernt von diesem sind. Durch die Ränder der Langlöcher, welche die Längserstreckung der Langlöcher in die vom lenkradseitigen Ende der Lenkspindel weggerichtete Richtung begrenzen, wird der Achsbolzen somit in seiner Ausgangsstellung gegen eine Verschiebung relativ zur Stelleinheit in die vom lenkradseitigen Ende der Lenkspindel weggerichtete Richtung abgestützt.

Vorteilhafterweise wirkt der Achsbolzen zumindest über den Großteil des möglichen Verschiebeweges des Achsbolzens in den Langlöchern mit dem Energieabsorptionsteil zusammen, vorzugsweise über den gesamten möglichen Verschiebeweg.

Beim Zusammenwirken des Achsbolzens mit dem Energieabsorptionsteil, wenn eine Verschiebung des Achsbolzens in den Langlöchern gegenüber der Stelleinheit erfolgt, wird das Energieabsorptionsteil plastisch verformt. Durch diese plastische Verformung wird Energie absorbiert. Mit Vorteil werden bei der Energieabsorption die Langlöcher oder deren Ränder nicht plastisch verformt. Dadurch kann die Führung über den gesamten Weg während der Energieabsorption - dem Crashweg - sehr genau gesichert werden.

In einer vorteilhaften Ausführungsform der Erfindung weist das Energieabsorptionsteil eine Rampe auf. Durch diese weist der Achsbolzen mit zunehmender Verschiebung des Achsbolzens in den Langlöchern, d.h. mit zunehmendem Abstand von seiner Ausgangsstellung, eine zunehmende Eindringtiefe in das Energieabsorptionsteil auf. Das Energieabsorptionsteil ragt also im Bereich der Rampe umso weiter in die Bewegungsbahn des Achsbolzens, je größer der Abstand des Achsbolzens von der Ausgangsstellung ist. Damit erhöht sich die pro Wegstrecke der Verschiebung des Achsbolzens absorbierte Energie zunehmend. Eine solche Rampe kann sich über die gesamte Wegstrecke, über welche der Achsbolzen bei der Verschiebung in den Langlöchern mit dem Energieabsorptionsteil zusammenwirkt, oder über nur einen Teil dieser Wegstrecke erstrecken. Vorteilhafterweise erstreckt sich die Rampe über mehr als 50% dieser gesamten Wegstrecke.

Eine besonders vorteilhafte Ausführungsform der Erfindung sieht vor, dass das Energieabsorptionsteil von einem eigenen Bauteil gebildet wird, das im Montagezustand der Lenksäule gegenüber der Stelleinheit unverschiebbar an dieser festgelegt ist und in die Bewegungsbahn des Achsbolzens bei seiner Verschiebung relativ zu den Langlöchern ragt, sodass dieses Bauteil bei einer Verschiebung des Achsbolzens relativ zu den Langlöchern, zumindest über einen Teil dieser Verschiebung, zwischen dem Achsbolzen und der Stelleinheit gequetscht wird. Vorzugsweise ist dieses Bauteil in eine in der Stelleinheit ausgebildete Vertiefung eingesetzt. Diese Vertiefung ist im zwischen dem ersten und dem zweiten Langloch (bezogen auf die axiale Richtung des Achsbolzens) liegenden Bereich der Stelleinheit ausgebildet.

Vorzugsweise ist das Energieabsorptionsteil aus Blech, vorzugsweise Stahlblech, ausgebildet und besitzt einen ausgebuchteten Bereich. Der Achsbolzen wirkt mit einer Oberfläche dieses ausgebuchteten Bereichs zusammen. Von der Seite des Energieabsorptionsteils aus gesehen, die der mit dem Achsbolzen zusammenwirkenden Oberfläche des Energieabsorptionsteils gegenüberliegt, besitzt das Energieabsorptionsteil somit eine Mulde. Mit anderen Worten besitzt das Energieabsorptionsteil eine wannenförmige Ausbildung, wobei die mit dem Achsbolzen zusammenwirkende Oberfläche im Bereich des Bodens der Wanne auf der von der Vertiefung weggerichteten Seite liegt.

Ein solches Blechteil kann insbesondere durch eine Umformoperation, wie Tiefziehen oder Prägen ausgebildet werden.

Zur Halterung des Energieabsorptionsteil in der Vertiefung in der Stelleinheit besitzt das Energieabsorptionsteil vorzugsweise seitlich abstehende Haltelaschen. Diese Haltelaschen stehen in axialer Richtung des Achsbolzens (=in Richtung der Schwenkachse) beidseitig vom ausgebuchteten Bereich des Energieabsorptionsteils ab. Beispielsweise können auf jeder Seite des Energieabsorptionsteils zwei abstehende Haltelaschen vorgesehen sein. Mit diesen Haltelaschen ist das Energieabsorptionsteil zur Befestigung in der Vertiefung günstigerweise in Seitenwände der Vertiefung eingegraben. Hierzu können die auf den gegenüberliegenden Seiten des Energieabsorptionsteils angeordneten Haltelaschen zunächst V-förmig zueinander stehen. Nach dem Einsetzen des Energieabsorptionsteils in die Vertiefung wird ein Presswerkzeug auf die Haltelaschen aufgesetzt und diese werden in Richtung zum Boden der Vertiefung gebogen, wobei sie sich in die Seitenwände der Vertiefung eingraben.

Die Feststellvorrichtung, in deren geöffnetem Zustand die Lenksäule verstellbar ist und in deren geschlossenen Zustand die eingestellte Position der Lenksäule fixiert ist, kann in unterschiedlicher Weise ausgebildet sein und reibschlüssig und/oder formschlüssig wirken. Unterschiedliche Ausbildungen von grundsätzlich einsetzbaren Feststellvorrichtungen sind im Stand der Technik bekannt, beispielsweise auch aus dem in der Beschreibungseinleitung genannten Stand der Technik.

Die Lenkspindel kann von einer Manteleinheit drehbar gelagert sein, welche wiederum von der Stelleinheit getragen wird. Um eine Längenverstellung der Lenksäule durchzuführen, kann die Manteleinheit im geöffneten Zustand der Feststellvorrichtung gegenüber der Stelleinheit in axialer Richtung der Lenkspindel verstellbar sein (wobei auch zwei teleskopierbare Abschnitte der Lenkspindel gegeneinander verschoben werden). Im geschlossenen Zustand der Feststellvorrichtung ist diese Verschiebbarkeit der Manteleinheit dann festgestellt.

Falls die Lenksäule nur höhenverstellbar ausgebildet sein soll, kann eine zusätzliche Manteleinheit auch entfallen und die Lenkspindel direkt drehbar in der Stelleinheit gelagert sein. Mit anderen Worten sind die Stelleinheit und die Manteleinheit dann einstückig ausgebildet oder die Stelleinheit ist auch als die Lenkspindel drehbar lagernde Manteleinheit ausgebildet.

Im Crashfall kann zur Ermöglichung der Verschiebung der Stelleinheit gegenüber dem fahrzeugfest angebrachten Achsbolzen sowohl bei einer nur höhen- oder neigungsverstellbaren als auch bei einer zudem auch längenverstellbaren Ausbildung der Lenksäule vorgesehen sein, dass die Verbindung der Konsoleneinheit mit dem Chassis des Kraftfahrzeugs lösbar ausgebildet ist (wobei die Loslösung oberhalb eines Grenzwerts der einwirkenden Kraft erfolgt). Es könnte auch vorgesehen sein, dass die Konsoleneinheit mit einer fahrzeugfest montierten Montageeinheit verbunden ist und im Crashfall oberhalb eines Grenzwerts der einwirkenden Kraft gegenüber dieser verschiebbar sind. Die Stelleinheit und die mit ihr über die Feststellvorrichtung verbundene Konsoleneinheit verschieben sich bei dieser Ausbildung im Crashfall zusammen gegenüber dem fahrzeugfest montierten Achsbolzen.

Andererseits könnte auch vorgesehen sein, dass sich im Crashfall oberhalb eines Schwellenwerts der auf die Stelleinheit einwirkenden Kraft die Stelleinheit gegenüber der Konsoleneinheit verschieben kann, beispielsweise unter Überwindung der durch Reibschluss bewirkten Haltekraft der geschlossenen Feststellvorrichtung.

Weitere Vorteile und Einzelheiten der Erfindung werden im Folgenden anhand der beiliegenden Zeichnung erläutert. In dieser zeigen:
Fig. 1 eine Schrägsicht einer Lenksäule gemäß einem Ausführungsbeispiel der Erfindung;
Fig. 2 eine Schrägsicht der Lenksäule aus einem anderen Blickwinkel;
Fig. 3a einen vertikalen Längsmittelschnitt durch die Lenksäule;
Fig. 3b einen vertikalen Längsmittelschnitt durch eine Lenksäule mit einer alternativen Ausführungsform;
Fig. 4 eine Schrägsicht des Energieabsorptionsteils im Zustand vor dem Einsetzen in die Vertiefung in der Stelleinheit;
Fig. 5 einen Schnitt entlang der Linie AA von Fig. 4 im in die Vertiefung eingesetzten, aber noch nicht mit der Stelleinheit verbundenen Zustand, zusammen mit einem schematisch angedeuteten Presswerkzeug zum Umbiegen der Haltelasche, ohne den Achsbolzen;
Fig. 6 eine Schnittdarstellung analog Fig. 5 im in der Vertiefung befestigten Zustand;
Fig. 7 einen Längsschnitt entlang der Linie BB von Fig. 6, zusammen mit dem Achsbolzen, im Normalbetrieb;
Fig. 8a einen Längsschnitt analog Fig. 7 nach einem Fahrzeugcrash;
Fig. 8b einen Längsschnitt analog Fig. 3b nach einem Fahrzeugcrash;
Fig. 9 eine Draufsicht auf einen Abschnitt der Stelleinheit mit dem in die Vertiefung eingesetzten Energieabsorptionsteil (der Achsbolzen nicht dargestellt);
Fig. 10 einen vergrößerten Ausschnitt aus Fig. 6.

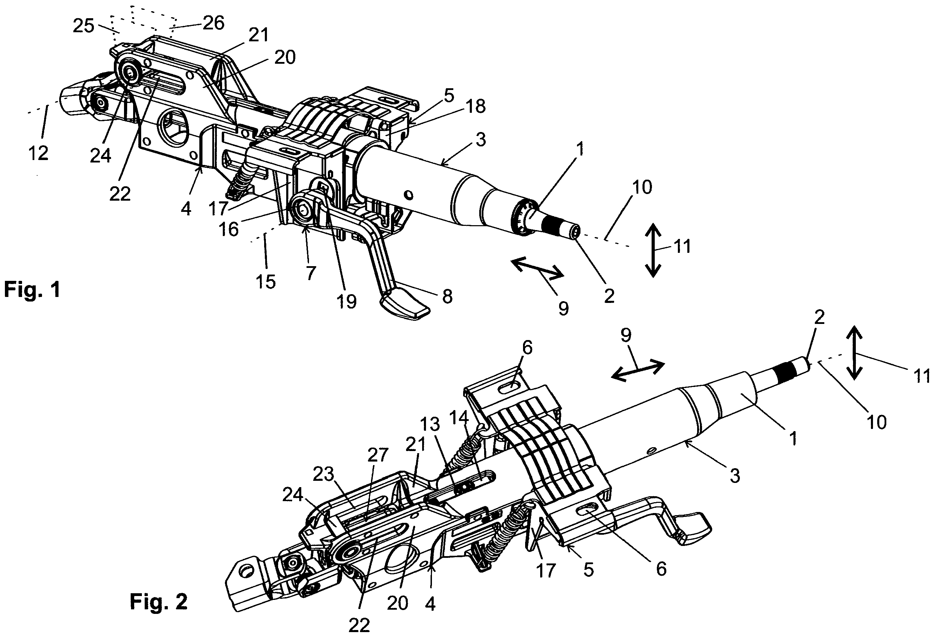

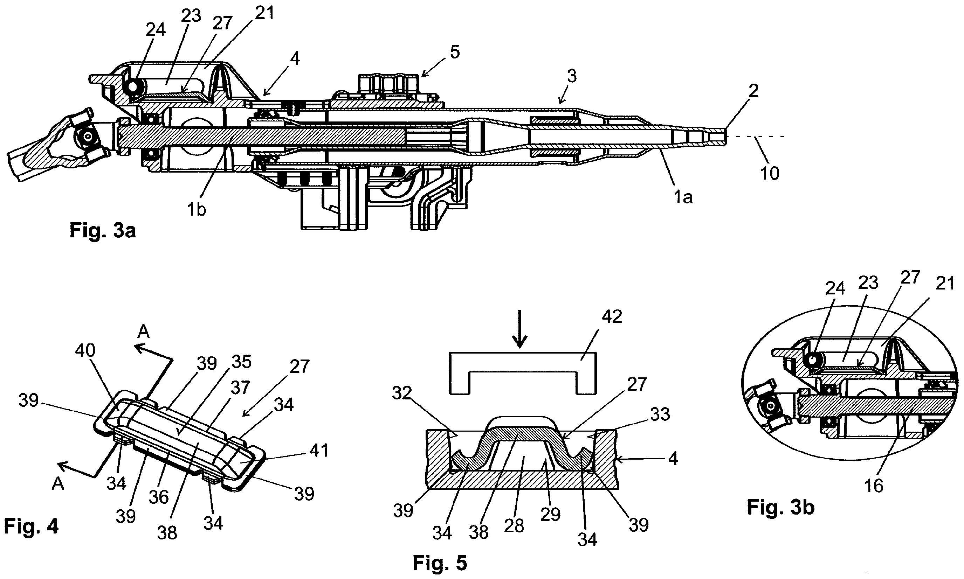

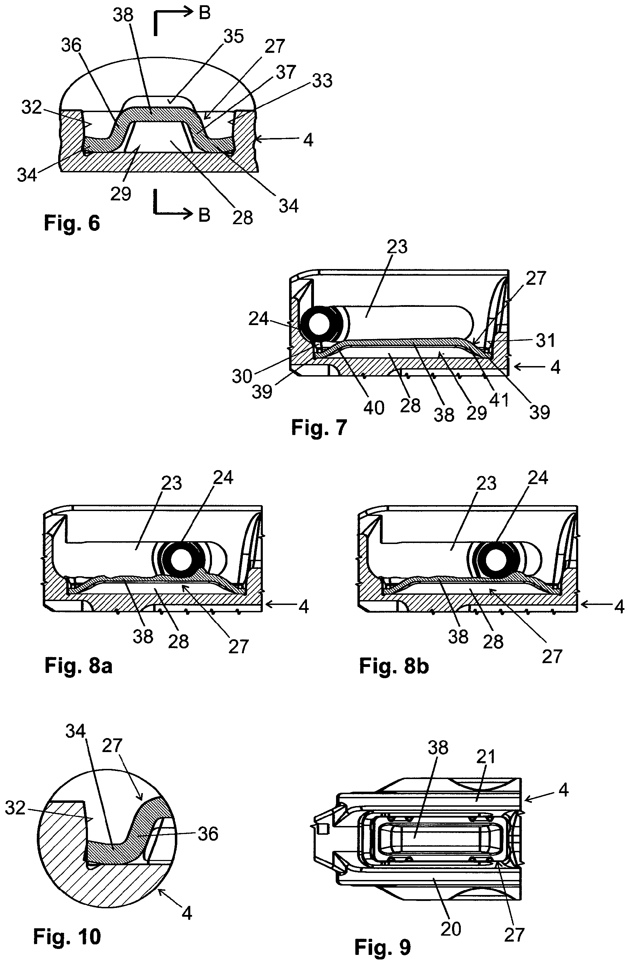

Ein Ausführungsbeispiel der Erfindung wird im Folgenden anhand der Figuren 1 bis 3a, sowie 4 bis 8a, sowie 9 und 10 erläutert. Die Figuren 3b und 8b zeigen eine andere Ausführungsform der Erfindung. Gleiartige oder gleichwirkende Bauteile sind in den verschiedenen Ausführungsformen mit denselben Bezugszeichen benannt.

Die Lenksäule weist eine drehbar gelagerte Lenkspindel 1 auf, an der an einem lenkradseitigen Ende 2 ein Lenkrad anbringbar ist. Ein an das lenkradseitige Ende anschließender Abschnitt der Lenkspindel 1 wird von einer Manteleinheit 3 drehbar gelagert. Die Manteleinheit 3 wird von einer Stelleinheit 4 getragen, welche wiederum von einer Konsoleneinheit 5 getragen wird, die zumindest im Normalbetrieb, solange kein Fahrzeugcrash aufgetreten ist, fahrzeugfest montiert ist. Im Ausführungsbeispiel sind hierzu Montagelöcher 6 dargestellt, welche zur Montage am Kraftfahrzeug von Montageschrauben durchsetzt werden.

Die Stelleinheit 4 ist im Ausführungsbeispiel als Gussteil, insbesondere als Aluminiumguss oder Magnesiumguss ausgebildet. Die Stelleinheit kann auch als Blechumformteil ausgebildet sein oder aus einem anderen Werkstoff gefertigt sein.

Die Lenksäule weist eine Feststellvorrichtung 7 auf, welche im gezeigten Ausführungsbeispiel von einem Betätigungshebel 8 zwischen einem geöffneten und einem geschlossenen Zustand verstellt werden kann. Im geöffneten Zustand kann die Manteleinheit 3 in Verstellrichtung 9 einer Längenverstellung der Lenksäule, welche parallel zur Längsachse 10 des an das lenkradseitige Ende 2 anschließenden Abschnitts der Lenkspindel 1 liegt, gegenüber der Stelleinheit 4 verstellt werden. Im Weiteren kann die Stelleinheit 4 in Verstellrichtung 11 einer Höhen- oder Neigungsverstellung gegenüber der Konsoleneinheit 5 verstellt werden. Hierzu wird die Stelleinheit 4 um eine Schwenkachse 12 verschwenkt. Bei der im Fahrzeug montieren Lenksäule ist die Schwenkachse 12 fahrzeugfest und horizontal ausgerichtet.

Zur Verdrehsicherung der Manteleinheit 3 gegenüber der Stelleinheit 4 ist an der Manteleinheit eine Nocke 13 angebracht, die in einem Schlitz 14 der Stelleinheit 3 in Richtung der Längsachse 10 verschiebbar geführt ist.

Im geschlossenen Zustand der Feststellvorrichtung 7 ist die eingestellte Position der Lenksäule festgestellt, d.h. die Manteleinheit 3 ist gegenüber der Stelleinheit 4 unverschiebbar gehalten und die Stelleinheit 4 ist gegenüber der Konsoleneinheit 5 um die Schwenkachse 12 unverschwenkbar gehalten.

Zur Längenverstellung der Lenksäule in die Verstellrichtung 9 im geöffneten Zustand der Feststellvorrichtung 7 weist die Lenkspindel 2 gegeneinander teleskopierbare Lenkspindelabschnitte 1a, 1b auf, vgl. Fig. 3a.

Die Feststellvorrichtung 7 kann in unterschiedlicher Weise ausgebildet sein. Beispielsweise kann der Betätigungshebel 8 bei seiner Verschwenkung um die Achse 15 eines Spannbolzens 16 der Feststellvorrichtung eine Nockenscheibe um diese Achse 15 gegenüber einer um diese Achse 15 unverdrehbar gehaltenen Nockenscheibe verdrehen, wobei eine Verspannung der Konsoleneinheit 5, Stelleinheit 4 und Manteleinheit 3 erfolgt. In unterschiedlicher Weise modifiziert ausgebildete Feststellvorrichtungen können ebenfalls eingesetzt werden. Die von der Feststellvorrichtung festgestellten Teile (Manteleinheit 3, Stelleinheit 4 und Konsoleneinheit 5) können durch Reibschluss und/oder Formschluss in die jeweilige Verstellrichtung 9, 11 unverstellbar gehalten sein. Im Ausführungsbeispiel erfolgt die Halterung durch Reibschluss. Die genauere Ausbildung der Feststellvorrichtung 7 ist nicht Gegenstand der vorliegenden Erfindung. In unterschiedlicher Weise ausgebildete Feststellvorrichtungen sind aus dem Stand der Technik bekannt, beispielsweise aus dem in der Beschreibungseinleitung genannten Stand der Technik.

Die Konsoleneinheit 5 weist im gezeigten Ausführungsbeispiel beidseitig der Stelleinheit sich erstreckende Seitenwangen 17, 18 auf, zwischen denen die Stelleinheit 4 liegt. Die Seitenwangen 17, 18 weisen in die Verstellrichtung 11 sich erstreckende Langlöcher 19 auf, welche vom Spannbolzen 16 durchsetzt werden. Im geschlossenen Zustand der Feststellvorrichtung 7 werden die Seitenwangen 17, 18 an Seitenflächen der Stelleinheit 4 angedrückt. Ein beispielsweise an der Unterseite der Stelleinheit 4 liegender Schlitz der Stelleinheit 4, der sich in Richtung der Längsachse 10 erstreckt und vom Ende der Stelleinheit 4 ausgeht, welches zum lenkradseitigen Ende 2 der Lenkspindel 1 weist, wird dabei zusammengedrückt, sodass die Manteleinheit 3 von der Stelleinheit 4 geklemmt wird.

Die Stelleinheit 4 weist einen ersten und einen zweiten Führungsschenkel 20, 21 auf, die von einem Basisabschnitt der Stelleinheit 4 abstehen. Im ersten Führungsschenkel 20 ist ein erstes Langloch 22 und im zweiten Führungsschenkel 21 ist ein zweites Langloch 23 ausgebildet. Die Langlöcher 22, 23 weisen Längserstreckungen auf, die parallel zueinander liegen. Die Längserstreckungen der Langlöcher 22, 23 liegen im Ausführungsbeispiel parallel zur Längsachse 10 des an das lenkradseitige Ende 2 anschließenden Abschnitts der Lenkspindel 1, wie dies bevorzugt ist. Abweichungen demgegenüber sind denkbar und möglich, wobei solche Abweichungen von der parallelen Ausrichtung zur Längsachse 10 vorzugsweise weniger als 30° betragen.

In Richtung der Schwenkachse 12 gesehen besitzen das erste und das zweite Langloch 22, 23 deckungsgleiche Ausdehnungen.

Die Langlöcher 22, 23 sind in einem Bereich der Stelleinheit 4 ausgebildet, der einen größeren Abstand vom lenkradseitigen Ende 2 der Lenkspindel 1 aufweist als der mit der Feststellvorrichtung 7 zusammenwirkende Bereich der Stelleinheit 4.

Die Langlöcher 22, 23 werden von einem Achsbolzen 24 durchsetzt, der die Schwenkachse 12 bildet. Die axiale Richtung des Achsbolzens 24 stimmt also mit der Schwenkachse 12 überein und die Schwenkachse 12 durchsetzt den Achsbolzen 24. Der Achsbolzen 24 ist im Betriebszustand der Lenksäule fahrzeugfest montiert. In Fig. 1 sind mit strichlierten Linien zwei Befestigungslaschen 25, 26 angedeutet, welche am Chassis des Kraftfahrzeuges montiert sind und zwischen denen der Achsbolzen 24 verläuft. Die Befestigungslaschen 25, 26 liegen beidseitig neben der Stelleinheit 4.

Der Achsbolzen 24 weist einen äußeren Durchmesser b auf, der kleiner als die rechtwinkelig zur Längserstreckung des jeweiligen Langlochs 22, 23 gemessene Breite B des jeweiligen Langlochs 22, 23 ist. Es wird dadurch ein Spiel für die Verschiebung des Achsbolzens 24 in Längsrichtung der Langlöcher 22, 23 ausgebildet. Vorzugsweise ist das Spiel kleiner als 0,5mm.

Die Führungsschenkel 20, 21 weisen einen Abstand voneinander auf (in Richtung der Schwenkachse 12 gesehen). Im Bereich, der bezogen auf die Richtung der Schwenkachse 12 zwischen dem ersten und dem zweiten Führungsschenkel 20, 21 und somit zwischen dem ersten und dem zweiten Langloch 22, 23 liegt, ist ein Energieabsorptionsteil 27 angeordnet. Das Energieabsorptionsteil 27 ist in eine Vertiefung 28, bevorzugt ein Sackloch, der Stelleinheit 4 eingesetzt. Die Vertiefung 28 besitzt einen Boden 29, auf dem das Energieabsorptionsteil 27 aufliegt. In der Vertiefung 28 ist das Energieabsorptionsteil 27 auch gegen eine Verschiebung gegenüber der Stelleinheit 4 in Richtung der Längsachse 10 bzw. in Richtung der Längserstreckung der Langlöcher 22, 23 unverschiebbar gehalten. Hierzu liegt das Energieabsorptionsteil 27 an die Vertiefung 28 in diese Richtung begrenzenden Wänden 30, 31 der Vertiefung 28 an, vgl. Fig. 7.

Zur Halterung des Energieabsorptionsteils 27 in der Vertiefung 28 sind weiters seitlich abstehende Haltelaschen 34 des Energieabsorptionsteils 27 in Seitenwände 32, 33 der Vertiefung eingegraben, wie dies weiter unten noch genauer erläutert wird.

Das Energieabsorptionsteil 27 ist aus einem ursprünglich ebenen Blech ausgebildet. Das fertiggestellte Energieabsorptionsteil 27 besitzt einen ausgebuchteten Bereich, wobei im Crashfall bei einer Verschiebung des Achsbolzens 24 in den Langlöchern 22, 23 der Achsbolzen 24 mit einer Oberfläche 35 des ausgebuchteten Bereichs des Energieabsorptionsteils 27 zusammenwirkt. In einem parallel zur Schwenkachse 12 verlaufenden Querschnitt durch das Energieabsorptionsteil 27 gesehen weist das Energieabsorptionsteil 27 erste und zweite seitliche Abstützstege 36, 37 auf, die von einem Decksteg 38 verbunden sind, vgl. Fig. 5 und 6. Die Teile 36, 37 und 38 weisen im Querschnitt gesehen zusammen eine U-förmige Ausbildung auf. An ihren vom Decksteg 38 abgelegenen Enden sind die Abstützstege 36, 37 über Umkrümmungen mit seitlich abstehenden Auflagestegen 39 verbunden. Diese liegen auf dem Boden 29 der Vertiefung 28 auf. Insgesamt ist das Energieabsorptionsteil 27 im Querschnitt gesehen "hutförmig" ausgebildet.

Der Decksteg 38 ist vom Boden 29 der Vertiefung 28 beabstandet und verläuft im Querschnitt, quer zur Verschieberichtung im Crashfall, gesehen parallel zu diesem.

Im parallel zur Längsachse des an das lenkradseitige Ende 2 anschließenden Abschnitts der Lenkspindel 1 verlaufenden Längsmittelschnitt durch das Energieabsorptionsteil 27 weist dieses an den Decksteg 38 beidseitig anschließende endseitige Abstützstege 40, 41 auf, vgl. Fig. 7. An ihren vom Decksteg 38 abgelegenen Enden sind diese über Umkrümmungen mit nach vorne und nach hinten abstehenden Auflagestegen 39 verbunden, welche auf dem Boden 29 aufliegen. Der Decksteg 38 verläuft in dem in Fig. 3a gezeigten Ausführungsbeispiel im Längsschnitt gesehen geneigt gegenüber dem Boden 29, wodurch eine Rampe ausgebildet wird. Die Neigung beträgt vorzugsweise weniger als 10°. Alternativ verläuft der Decksteg 38 in dem in Fig. 3b gezeigten Ausführungsbeispiel im Längsschnitt gesehen parallel gegenüber dem Boden 29, so dass keine Neigung im Decksteg 38 ausgebildet ist.

In Bereichen von Unterbrechungen der seitlich abstehenden Auflagestege 39 sind die seitlich abstehenden Haltelaschen 34 angeordnet. Nach der Ausbildung des Energieabsorptionsteils 27 und vor der Befestigung an der Stelleinheit 4 sind die Haltelaschen 34 in die von der Ebene des Längsmittelschnitts durch das Energieaborptionsteil 27 wegweisende Richtung schräg nach oben geneigt (im Querschnitt gesehen in Richtung zu einer den Decksteg 38 verlängernden Geraden). Die bezogen auf den Querschnitt auf gegenüberliegenden Seiten des Energieabsorptionsteils 27 angeordneten Haltelaschen 34 stehen dadurch V-förmig zueinander. In diesem Zustand wird das Energieabsorptionsteil 27 in die Vertiefung 28 eingeführt, vgl. Fig. 5. Die Haltelaschen 34 sind hierbei von den Seitenwänden 32, 33 der Vertiefung 28 beabstandet oder liegen an den Seitenwänden 32, 33 an, ohne in diese eingegraben zu sein. In der Folge werden die Haltelaschen 34 mit einem in Fig. 5 schematisch angedeuteten Presswerkzeug nach unten, in Richtung zum Boden 29 gedrückt. Sie kommen dadurch in innigen Kontakt mit den Seitenwänden 32, 33 und graben sich in diese ein, vgl. Fig. 6. Im Zustand, in welchem die Haltelaschen 34 parallel zum Boden 29 ausgerichtet sind und somit parallel zu den seitlichen Abstützstegen 36, 37 liegen, erstrecken sich die Haltelaschen 34 weiter nach außen als die seitlichen Abstützstege 36, 37. Das Energieabsorptionsteil 27 ist damit durch einen sehr einfachen Montagevorgang an der Stelleinheit 4 befestigt.

Fig. 7 zeigt den Zustand, den der Achsbolzen 24 im Normalbetrieb, so lange kein Fahrzeugcrash aufgetreten ist einnimmt. Der Achsbolzen 24 befindet sich hier in einer Ausgangsstellung an den Enden der Langlöcher 22, 23, welche vom lenkradseitigen Ende 2 der Lenkspindel 1 entfernt liegen. Dieser Zustand ist auch in den Fig. 1 und 2, sowie in Fig. 3a und 3b dargestellt.

Gegen eine Verschiebung relativ zu den Langlöchern 22, 23 aus dieser Ausgangsstellung in die vom lenkradseitigen Ende 2 der Lenkspindel 1 weggerichtete Richtung kann der Achsbolzen 24 durch die endseitigen Ränder der Langlöcher 22, 23 abgestützt sein. Gegen eine Verschiebung ausgehend von der Ausgangsstellung in die zum lenkradseitigen Ende 2 der Lenkspindel 1 gerichtete Richtung relativ zur Stelleinheit 4 ist der Achsbolzen 24 beispielsweise durch das Energieabsorptionsteil 27 abgestützt. Der Achsbolzen 24 kommt hierzu in Anlage mit einem an den Decksteg 38 anschließenden Abschnitt des endseitigen Abstützsteges 40. In Fig. 7 ist ein Spiel zwischen dem Achsbolzen 24 und dem Energieabsorptionsteil 27 eingezeichnet. Wenn die Halterung des Achsbolzens 24 in der Ausgangslage durch das Energieabsorptionsteil 27 erfolgt, ist ein solches Spiel aber vorzugsweise nicht vorhanden oder nur sehr gering (sodass die mögliche Verschiebung des Achsbolzens 24 ohne Verformung des Energieabsorptionsteils 27 vorzugsweise weniger als 1 mm beträgt).

Die Fixierung des Achsbolzens 24 gegenüber den Langlöchern 22, 23 in der Ausgangslage kann auch in anderer Weise erfolgen, insbesondere auch durch zwei andere zusammenwirkende Teile, wie weiter unten noch erläutert wird. Auch eine Kombination der genannten Maßnahmen ist möglich.

Wenn auf das lenkradseitige Ende 2 der Lenkspindel 1 eine in Richtung der Längsachse 10 wirkende Kraft ausgeübt wird, die im Sinne eines Zusammenstauchens der Lenksäule wirkt also in Richtung zur Fahrzeugfront gerichtet ist, so verbleibt der Achsbolzen 24 in seiner Ausgangsstellung, solange diese Kraft einen vordefinierten Schwellenwert (=Grenzwert) nicht übersteigt. Ein Crashfall im Sinne der vorliegenden Schrift bedeutet, dass der Schwellenwert überschritten wird. Vorteilhafterweise beträgt dieser Schwellenwert mindestens 800 N. Der Schwellenwert liegt günstigerweise unterhalb von 2000 N. Die Höhe des Schwellenwertes wird bei der Konstruktion der Lenksäule ausgelegt. Bei Überschreiten des Schwellenwerts kommt es zu einer Verschiebung der Stelleinheit 4 gegenüber dem Achsbolzen 24, der fahrzeugfest gehalten bleibt, wobei sich der Achsbolzen 24 relativ zu den Langlöchern 22, 23 verschiebt, und zwar in eine zum lenkradseitigen Ende 2 weisende Richtung. Hierbei kommt es zu einem Zusammenwirken des Achsbolzens 24 mit dem Energieabsorptionsteil 27, wodurch Energie absorbiert wird.

Beim Zusammenwirken des Achsbolzens 24 mit dem Energieabsorptionsteil 27 läuft der Achsbolzen 24 an das Energieabsorptionsteil 27 an und verformt dieses plastisch, indem Material des Energieabsorptionsteils verdrängt wird. Das Energieabsorptionsteil 27 wird hierbei vom Achsbolzen 24 gequetscht, es wird also ein Druck vom Achsbolzen 24 auf das Energieabsorptionsteil 27 ausgeübt.

Die ausgeübte Druckspannung führt insbesondere zu einem Fließen von Material des Energieabsorptionsteils 27. Fig. 8a und Fig. 8b zeigen einen aus der Ausgangsstellung verschobenen Zustand des Achsbolzens 24, wobei die Verformung des Energieabsorptionsteils 27 unter Materialfluss stark übertrieben dargestellt ist. Fig. 8a und 8b sollen verdeutlichen, dass vom Achsbolzen 24 vorzugsweise ein Materialfluss von Material des Energieabsorptionsteils 27, insbesondere des Decksteges 38, bewirkt wird, der zumindest auch in Längsrichtung der Langlöcher 22, 23 erfolgt. Bei der Ausführungsform entsprechend der Fig. 8a ist die Materialverdrängung größer, da der Decksteg 38 mit einer geneigten Rampe versehen ist, im Vergleich zur Ausführungsform entsprechend der Fig. 8b, bei der der Decksteg 38 parallel zum Boden 29 ausgerichtet verläuft.

Zusätzlich oder anstelle eines Materialflusses von Material des Decksteges 38 kann durch den vom Achsbolzen 24 ausgeübten Druck auch eine Verformung des Energieabsorptionsteils 27 beispielsweise im Bereich der Abstützstege 36, 37 erfolgen.

Zumindest ein Teil der Energieabsorption kann somit auch durch am Energieabsorptionsteil 27 durch den Achsbolzen 24 ausgeübte Umformarbeit erfolgen. Das Energieabsorptionsteil 27 wird hierbei druckbelastet. Vorzugsweise wird aber zumindest ein Teil, vorzugsweise zumindest ein Großteil, besonders bevorzugt mehr als 90%, der Energieabsorption nicht durch Biegearbeit des Energieabsorptionsteils 27 bewirkt, sondern durch andere Verformungsarbeit des Energieabsorptionsteils 27.

Durch die beschriebene, vom Decksteg 38 ausgebildete Rampe, entsprechend der Ausführungsform, wie sie in Fig. 3a und Fig. 8a veranschaulicht ist, ragt das Energieabsorptionsteil 27 mit zunehmendem Abstand des Achsbolzens 24 von seiner Ausgangsstellung zunehmend in die Bewegungsbahn des Achsbolzens 24, d.h. die Überlappung u (vgl. Fig. 8a) des Achsbolzens mit dem Energieabsorptionsteil 27 nimmt zu. Die Energieabsorption nimmt dadurch mit zunehmendem Abstand von der Ausgangsstellung des Achsbolzens 24 bei dessen Verschiebung in den Langlöchern 22, 23 zu. Im gezeigten Ausführungsbeispiel weist die Rampe eine konstante Neigung auf, liegt also in einer Ebene. In anderen Ausführungsbeispielen könnte sich die Neigung der Rampe beispielsweise mit zunehmendem Abstand von der Ausgangsstellung des Achsbolzens 24 vergrößern. Eine entsprechend progressive Zunahme der Energieabsorption kann dadurch erreicht werden.

Ein mit einer Rampe ausgebildetes Energieabsorptionsteil 27 könnte auch als "keilförmig" bezeichnet werden.

Die Fig. 8a korrespondiert mit der Ausbildung der Lenksäule entsprechend der Fig. 3a, bei der der der Decksteg 38 mit einem rampenartigem Anstieg ausgebildet ist. Völlig analog kann entsprechend den Fig. 3b bzw. Fig. 8b der Decksteg 38 parallel zur Verschieberichtung ausgerichtet sein, so dass das Niveau der Energieabsorption konstant bleibt. Die Rampe kann entsprechend auch entfallen. Entsprechend ist die Überdeckung über die Bewegungsbahn des Achsbolzens 24 konstant. Die Fig. 8b veranschaulicht eine Situation nach dem Crash, bei der der Decksteg im Normalzustand entsprechend der Fig. 3b parallel zur Verschieberichtung ausgerichtet ist. Alle anderen Merkmale entsprechen dabei den anhand der Fig. 3a bzw. der Fig. 8a dargestellten Merkmalen. Andere Formen des Decksteges mit Anstieg und Abfall sind weiterhin denkbar und möglich, um so beispielsweise einen definierten Kraftverlauf bei der Energieabsorption zu erreichen.

Die gewünschte Energieabsorption kann in sehr einfacher Weise durch die Form des Energieabsorptionsteils, insbesondere die Größe des Überlapps u entlang der Bewegungsbahn des Achsbolzens 24, und/oder die Blechdicke und/oder die Materialeigenschaften des Blechs eingestellt werden.

Um die Verschiebung der Stelleinheit 4 im Crashfall gegenüber dem Achsbolzen 24 zu ermöglichen, kann beim gezeigten Ausführungsbeispiel vorgesehen sein, dass sich die Konsoleneinheit 5 im Crashfall vom Fahrzeugchassis lösen kann. Hierzu kann beispielsweise die Konsoleneinheit 5 durch Befestigungsschrauben mit dem Fahrzeugchassis verbunden sein, welche in zur Fahrzeugfront hin offene Schlitze im Fahrzeugchassis eingreifen. Bei Überschreiten eines Grenzwerts einer auf die Konsoleneinheit 5 in Richtung der Längsachse 10 wirkenden, zur Fahrzeugfront gerichteten Kraft, werden die Befestigungsschrauben aus den offenen Enden der Schlitze hinausgedrückt. Eine andere Möglichkeit ist beispielsweise, dass die Konsoleneinheit 5 mit einer Montageeinheit verbunden ist, die ihrerseits am Fahrzeugchassis befestigt ist. Die Konsoleneinheit 5 ist nach Art eines Schlittens gegenüber der Montageeinheit in Richtung der Längsachse 10 verschiebbar geführt. Zwischen der Konsoleneinheit 5 und der Montageeinheit ist dabei eine Losbrechverbindung ausgebildet, welche bei Überschreiten eines Grenzwertes einer auf die Konsoleneinheit 5 in Richtung der Längsachse 10 wirkenden, zur Fahrzeugfront gerichteten Kraft bricht, worauf die Verschiebung zwischen der Konsoleneinheit 5 und der Montageeinheit freigegeben ist. Eine solche Losbrechverbindung kann beispielsweise durch ein Kunststoffteil realisiert werden. Wenn der Achsbolzen 24 durch das Energieabsorptionsteil 27 oder durch andere zusammenwirkende Teile in seiner Ausgangsstellung gehalten ist, könnte eine solche Losbrechverbindung auch entfallen.

In einer anderen möglichen Ausführungsform könnte es auch vorgesehen sein, dass die Stelleinheit 4 bei Überschreiten des Schwellenwerts der Kraft, bis zu welchem der Achsbolzen 24 in seiner Ausgangsstellung verbleibt, gegenüber der Konsoleneinheit 5 verschiebbar ist. Beispielsweise könnte diese Verschiebbarkeit durch Überwindung der von der geschlossenen Feststellvorrichtung 7 ausgeübten Feststellkraft ermöglicht werden. Im gezeigten Ausführungsbeispiel würde dies durch eine Überwindung der Reibkraft zwischen den Seitenwangen 17, 18 und den Seitenflächen der Stelleinheit 4 ermöglicht werden. Der Spannbolzen 16 könnte hierbei Langlöcher in der Stelleinheit 4 durchsetzen, welche parallel zu den Langlöchern 22, 23 verlaufen.

In anderen Ausführungsvarianten der Erfindung könnte das Energieabsorptionsteil auch in anderer Weise an der Stelleinheit 4 befestigt sein, beispielsweise durch Verschweißen. Auch eine materialeinstückige Ausbildung des Energieabsorptionsteils 27 mit der Stelleinheit 4 ist grundsätzlich denkbar und möglich.

Der Achsbolzen 24 könnte auch mehrteilig ausgebildet sein und beispielsweise einen inneren Zapfen und eine auf diesem angeordneten, im Bereich zwischen den Langlöchern 22, 23 liegende Hülse umfassen.

Zusätzliche Energieabsorptionsmechanismen, beispielsweise zwischen der Nocke 13 und dem Schlitz könnten vorgesehen sein. Legende zu den Hinweisziffern:

| | | | |
|---|---|---|---|
| 1 | Lenkspindel | 21 | zweiter Führungsschenkel |
| 1a | Lenkspindelabschnitt | 22 | erstes Langloch |
| 1b | Lenkspindelabschnitt | 23 | zweites Langloch |
| 2 | lenkradseitiges Ende | 24 | Achsbolzen |
| 3 | Manteleinheit | 25 | Befestigungslasche |
| 4 | Stelleinheit | 26 | Befestigungslasche |
| 5 | Konsoleneinheit | 27 | Energieabsorptionsteil |
| 6 | Montageloch | 28 | Vertiefung |
| 7 | Feststellvorrichtung | 29 | Boden |
| 8 | Betätigungshebel | 30 | Wand |
| 9 | Verstellrichtung | 31 | Wand |
| 10 | Längsachse | 32 | Seitenwand |
| 11 | Verstellrichtung | 33 | Seitenwand |
| 12 | Schwenkachse | 34 | Haltelasche |
| 13 | Nocke | 35 | Oberfläche |
| 14 | Schlitz | 36 | seitlicher Abstützsteg |
| 15 | Achse | 37 | seitlicher Abstützsteg |
| 16 | Spannbolzen | 38 | Decksteg |
| 17 | Seitenwange | 39 | Auflagesteg |
| 18 | Seitenwange | 40 | endseitiger Abstützsteg |
| 19 | Langloch | 41 | endseitiger Abstützsteg |
| 20 | erster Führungsschenkel | 42 | Presswerkzeug |

## Patentansprüche

1. Lenksäule für ein Kraftfahrzeug mit einer drehbar gelagerten Lenkspindel (1) und einer Stelleinheit (4), die einen an ein lenkradseitiges Ende (2) der Lenkspindel (1) anschließenden Abschnitt der Lenkspindel (1) trägt und die im geöffneten Zustand einer Feststellvorrichtung (7) zur Verstellung der Lenksäule in eine Verstellrichtung (11) einer Höhen- oder Neigungsverstellung gegenüber einer Konsoleneinheit (5) um eine Schwenkachse (12) verschwenkbar ist und deren Verschwenkung gegenüber der Konsoleneinheit (5) um die Schwenkachse (12) im geschlossenen Zustand der Feststellvorrichtung (7) festgestellt ist, wobei die Schwenkachse (12) von einem fahrzeugfest montierbaren Achsbolzen (24) gebildet wird, der ein erstes und ein zweites Langloch (22, 23) der Stelleinheit (4) durchsetzt, und wobei im Fall eines Fahrzeugcrashes die Stelleinheit (4) gegenüber dem Achsbolzen (24) unter Verschiebung des Achsbolzens (24) in den Langlöchern (22, 23) verschiebbar ist, wobei in einem bezogen auf die Richtung der Schwenkachse (12) zwischen dem ersten und dem zweiten Langloch (22, 23) liegenden Bereich ein Energieabsorptionsteil (27) angeordnet ist, **dadurch gekennzeichnet, dass** der Achsbolzen (24) bei seiner Verschiebung in den Langlöchern (22, 23) unter plastischer Verformung des Energieabsorptionsteils (27) durch Ausübung von Druck auf das Energieabsorptionsteil (27) und Verdrängung von Material des Energieabsorptionsteils (27) mit dem Energieabsorptionsteil (27) zusammenwirkt, wobei das Energieabsorptionsteil (27) in einer Vertiefung (28) in der Stelleinheit (4) angeordnet ist.

2. Lenksäule nach Anspruch 1, **dadurch gekennzeichnet, dass** das Energieabsorptionsteil (27) eine Rampe aufweist, durch welche der Achsbolzen (24) mit zunehmender Verschiebung des Achsbolzens (24) in den Langlöchern (22, 23) eine zunehmende Eindringtiefe in das Energieabsorptionsteil (27) aufweist.

3. Lenksäule nach Anspruch 2, **dadurch gekennzeichnet, dass** die Rampe des Energieabsorptionsteils (27) sich zumindest über die Hälfte der Längserstreckung der Langlöcher (22, 23) ausdehnt.

4. Lenksäule nach einem der Ansprüche 1 bis 3, **dadurch gekennzeichnet, dass** der Achsbolzen (24) bei einer auf das lenkradseitige Ende (2) der Lenkspindel (1) in Richtung der Längsachse (10) des an das lenkradseitige Ende (2) anschließenden Abschnitts der Lenkspindel (1) einwirkenden Kraft bis zu einem Schwellenwert dieser Kraft in einer Ausgangsstellung gegenüber den Langlöchern (22, 23) verbleibt und dass sich die Stelleinheit (4) bei Überschreiten des Schwellenwertes dieser Kraft gegenüber dem Achsbolzen (24) verschiebt, wobei sich der Achsbolzen (24) gegenüber den Langlöchern (22, 23) verschiebt.

5. Lenksäule nach Anspruch 4, **dadurch gekennzeichnet, dass** der Achsbolzen (24) bis zum Schwellenwert der Kraft zumindest auch durch das Energieabsorptionsteil (27) in der Ausgangsstellung gehalten ist.

6. Lenksäule nach einem der Ansprüche 1 bis 5, **dadurch gekennzeichnet, dass** die ersten und zweiten Langlöcher (22, 23) in von einem Basisabschnitt der Stelleinheit (4) abstehenden ersten und zweiten Führungsschenkeln (20, 21) der Stelleinheit (4) angeordnet sind.

7. Lenksäule nach einem der Ansprüche 1 bis 6, **dadurch gekennzeichnet, dass** der Außendurchmesser (b) des Achsbolzens (24) in seinen die ersten und zweiten Langlöcher (22, 23) durchsetzenden Abschnitten kleiner als die Breite (B) der ersten und zweiten Langlöcher (22, 23) ist.

8. Lenksäule nach einem der Ansprüche 1 bis 7, **dadurch gekennzeichnet, dass** das Energieabsorptionsteil (27) ein an der Stelleinheit (4) befestigtes Bauteil ist, welches beim Zusammenwirken mit dem Achsbolzen (24) zwischen dem Achsbolzen (24) und der Stelleinheit (4) gequetscht wird.

9. Lenksäule nach einem der Ansprüche 1 bis 8, **dadurch gekennzeichnet, dass** das Energieabsorptionsteil (27) aus Blech ausgebildet ist und einen ausgebuchteten Bereich aufweist, von dem eine Oberfläche (35) mit dem Achsbolzen (24) zusammenwirkt.

10. Lenksäule nach Anspruch 9, **dadurch gekennzeichnet, dass** das Energieabsorptionsteil (27) in einem parallel zur Schwenkachse (12) verlaufenden Querschnitt gesehen erste und zweite seitliche Abstützstege (36, 37) und einen die seitlichen Abstützstege (36, 37) verbindenden Decksteg (38) aufweist, welcher an seiner Oberseite die mit dem Achsbolzen (24) zusammenwirkende Oberfläche (35) aufweist.

11. Lenksäule nach Anspruch 9 oder 10, **dadurch gekennzeichnet, dass** das Energieabsorptionsteil (27) seitlich abstehende Auflagestege (39) aufweist, mit denen es auf dem Boden (29) der Vertiefung (28) aufliegt.

12. Lenksäule nach einem der Ansprüche 8 bis 11, **dadurch gekennzeichnet, dass** das Energieabsorptionsteil (27) zur Halterung in der Vertiefung (28) seitlich abstehende Haltelaschen (34) aufweist, die mit Seitenwänden (32, 33) der Vertiefung (28) zusammenwirken.

13. Lenksäule nach Anspruch 12, **dadurch gekennzeichnet, dass** die Haltelaschen (34) in die Seitenwände (32, 33) eingegraben sind.

14. Verfahren zur Ausbildung einer Lenksäule nach Anspruch 12 oder 13, **dadurch gekennzeichnet, dass** zunächst das Energieabsorptionsteil (27) mit auf gegenüberliegenden Seiten des Energieabsorptionsteils (27) angeordneten Haltelaschen (34) ausgebildet wird, die V-förmig zueinander stehen, und dass nach Einlegen des Energieabsorptionsteils (27) in die Vertiefung (28) in der Stelleinheit (4) die Haltelaschen (34) mit einem Presswerkzeug (42) in Richtung zu einem Boden (29) der Vertiefung (28) gebogen werden, wobei sich die Haltelaschen (34) in Seitenwände (32, 33) der Vertiefung (28) eingraben.

## Claims

1. Steering column for a motor vehicle, having a rotatably mounted steering shaft (1) and having an adjustment unit (4) which bears a section of the steering shaft (1) adjoining a steering wheel-side end (2) of the steering shaft (1) and which, in the open state of a locking apparatus (7), is pivotable relative to a bracket unit (5) about a pivot axis (12) for adjustment of the steering column in an adjustment direction (11) for a height or tilt adjustment and the pivoting of which relative to the bracket unit (5) about the pivot axis (12) is locked in the closed state of the locking apparatus (7), wherein the pivot axis (12) is formed by a spindle bolt (24) which can be mounted so as to be fixed with respect to the vehicle and which extends through a first and a second elongated hole (22, 23) of the adjustment unit (4), and wherein, in the event of a vehicle crash, the adjustment unit (4) is displaceable relative to the spindle bolt (24) with displacement of the spindle bolt (24) in the elongated holes (22, 23), wherein, in a region situated between the first and the second elongated hole (22, 23) in relation to the direction of the pivot axis (12), there is arranged an energy absorption part (27), **characterized in that** the spindle bolt (24), during the displacement thereof in the elongated holes (22, 23), interacts with the energy absorption part (27) with plastic deformation of the energy absorption part (27) owing to exertion of pressure on the energy absorption part (27) and displacement of material of the energy absorption part (27), wherein the energy absorption part (27) is arranged in a depression (28) in the adjustment unit (4).

2. Steering column according to Claim 1, **characterized in that** the energy absorption part (27) has a ramp which has the effect that, with progressive displacement of the spindle bolt (24) in the elongated holes (22, 23), the spindle bolt (24) penetrates to an ever increasing depth into the energy absorption part (27).

3. Steering column according to Claim 2, **characterized in that** the ramp of the energy absorption part (27) extends over at least half of the longitudinal extent of the elongated holes (22, 23).

4. Steering column according to one of Claims 1 to 3, **characterized in that**, when a force acts on the steering wheel-side end (2) of the steering shaft (1) in the direction of the longitudinal axis (10) of the section of the steering shaft (1) adjoining the steering wheel-side end (2), up to a threshold value of said force, the spindle bolt (24) remains in an initial position relative to the elongated holes (22, 23), and **in that**, in the event of the threshold value of said force being exceeded, the adjustment unit (4) is displaced relative to the spindle bolt (24), wherein the spindle bolt (24) is displaced relative to the elongated holes (22, 23).

5. Steering column according to Claim 4, **characterized in that**, up to the threshold value of the force, the spindle bolt (24) is held in the initial position at least inter alia by the energy absorption part (27).

6. Steering column according to one of Claims 1 to 5, **characterized in that** the first and second elongated holes (22, 23) are arranged in first and second guide legs (20, 21) of the adjustment unit (4) which project from a base section of the adjustment unit (4).

7. Steering column according to one of Claims 1 to 6, **characterized in that** the outer diameter (b) of the spindle bolt (24) in its sections in which it extends through the first and second elongated holes (22, 23) is smaller than the width (B) of the first and second elongated holes (22, 23).

8. Steering column according to one of Claims 1 to 7, **characterized in that** the energy absorption part (27) is a component which is fastened to the adjustment unit (4) and which, when it interacts with the spindle bolt (24), is squeezed between the spindle bolt (24) and the adjustment unit (4).

9. Steering column according to one of Claims 1 to 8, **characterized in that** the energy absorption part (27) is formed from sheet metal and has a bulged region, a surface (35) of which interacts with the spindle bolt (24).

10. Steering column according to Claim 9, **characterized in that** the energy absorption part (27), as viewed in a cross section running parallel to the pivot axis (12), has first and second lateral support webs (36, 37) and a top web (38) which connects the lateral support webs (36, 37) and which, on its top side, has the surface (35) which interacts with the spindle bolt (24).

11. Steering column according to Claim 9 or 10, **characterized in that** the energy absorption part (27) has laterally projecting rest webs (39) by which it rests on the base (29) of the depression (28).

12. Steering column according to one of Claims 8 to 11, **characterized in that** the energy absorption part (27) has, for retention in the depression (28), laterally projecting retention lugs (34) which interact with side walls (32, 33) of the depression (28).

13. Steering column according to Claim 12, **characterized in that** the retention lugs (34) dig into the side walls (32, 33).

14. Method for forming a steering column according to Claim 12 or 13, **characterized in that**, firstly, the energy absorption part (27) is formed with retention lugs (34) which are arranged on opposite sides of the energy absorption part (27) and which are oriented in a V shape with respect to one another, and **in that**, after the insertion of the energy absorption part (27) into the depression (28) in the adjustment unit (4), the retention lugs (34) are bent by way of a pressing tool (42) in the direction of a base (29) of the depression (28), wherein the retention lugs (34) dig into side walls (32, 33) of the depression (28).

## Revendications

1. Colonne de direction pour un véhicule automobile comprenant une broche de direction (1) supportée à rotation et une unité de commande (4) qui porte une portion de la broche de direction (1) se raccordant à une extrémité (2) de la broche de direction (1) du côté du volant de direction et qui peut pivoter autour d'un axe de pivotement (12) dans l'état ouvert d'un dispositif de fixation (7) pour déplacer la colonne de direction dans une direction de réglage (11) d'un réglage en hauteur ou en inclinaison par rapport à une unité de console (5) et dont le pivotement par rapport à l'unité de console (5) autour de l'axe de pivotement (12) est bloqué dans l'état fermé du dispositif de fixation (7), l'axe de pivotement (12) étant formé par un boulon d'axe (24) pouvant être monté fixement sur le véhicule, qui traverse un premier et un deuxième trou oblong (22, 23) de l'unité de commande (4) et l'unité de commande (4), dans le cas d'une collision du véhicule, pouvant être déplacée par rapport au boulon d'axe (24) par déplacement du boulon d'axe (24) dans les trous oblongs (22, 23), une partie d'absorption d'énergie (27) étant disposée dans une région située par rapport à la direction de l'axe de pivotement (12) entre le premier et le deuxième trou oblong (22, 23), **caractérisée en ce que** le boulon d'axe (24), lors de son déplacement dans les trous oblongs (22, 23), coopère avec la partie d'absorption d'énergie (27) par déformation plastique de la partie d'absorption d'énergie (27) en exerçant une pression sur la partie d'absorption d'énergie (27) et en repoussant le matériau de la partie d'absorption d'énergie (27), la partie d'absorption d'énergie (27) étant disposés dans un renfoncement (28) dans l'unité de commande (4).

2. Colonne de direction selon la revendication 1, **caractérisée en ce que** la partie d'absorption d'énergie (27) présente une rampe par le biais de laquelle le boulon d'axe (24) pénètre plus profondément dans la partie d'absorption d'énergie (27) lors du déplacement poursuivi du boulon d'axe (24) dans les trous oblongs (22, 23).

3. Colonne de direction selon la revendication 2, **caractérisée en ce que** la rampe de la partie d'absorption d'énergie (27) s'étend au moins sur la moitié de l'étendue longitudinale des trous oblongs (22, 23).

4. Colonne de direction selon l'une quelconque des revendications 1 à 3, **caractérisée en ce que** le boulon d'axe (24), dans le cas d'une force agissant sur l'extrémité (2) côté volant de direction de la broche de direction (1) dans la direction de l'axe longitudinal (10) de la portion de la broche de direction (1) se raccordant à l'extrémité (2) de la broche de direction, reste jusqu'à une valeur seuil de cette force, dans une position de départ par rapport aux trous oblongs (22, 23) et **en ce que** l'unité de commande (4), en cas de dépassement de la valeur de seuil de cette force, se déplace par rapport au boulon d'axe (24), le boulon d'axe (24) se déplaçant par rapport aux trous oblongs (22, 23).

5. Colonne de direction selon la revendication 4, **caractérisée en ce que** le boulon d'axe (24), jusqu'à la valeur seuil de la force, est retenu au moins également par la partie d'absorption d'énergie (27) dans la position de départ.

6. Colonne de direction selon l'une quelconque des revendications 1 à 5, **caractérisée en ce que** les premier et deuxième trous oblongs (22, 23) sont disposés dans des première et deuxième branches de guidage (20, 21) de l'unité de commande (4) faisant saillie depuis une partie de base de l'unité de commande (4).

7. Colonne de direction selon l'une quelconque des revendications 1 à 6, **caractérisée en ce que** le diamètre extérieur (b) du boulon d'axe (24) dans ses portions traversant les premier et deuxième trous oblongs (22, 23) est inférieur à la largeur (B) des premier et deuxième trous oblongs (22, 23).

8. Colonne de direction selon l'une quelconque des revendications 1 à 7, **caractérisée en ce que** la partie d'absorption d'énergie (27) est un composant fixé à l'unité de commande (4), qui est écrasé entre le boulon d'axe (24) et l'unité de commande (4) lors de la coopération avec le boulon d'axe (24).

9. Colonne de direction selon l'une quelconque des revendications 1 à 8, **caractérisée en ce que** la partie d'absorption d'énergie (27) est réalisée en tôle et présente une région bombée dont une surface (35) coopère avec le boulon d'axe (24).

10. Colonne de direction selon la revendication 9, **caractérisée en ce que** la partie d'absorption d'énergie (27), vue en section transversale parallèle à l'axe de pivotement (12), présente des première et deuxième nervures de support latérales (36, 37) et une nervure de recouvrement (38) reliant les nervures de support latérales (36, 37), qui présente au niveau de son côté supérieur la surface (35) coopérant avec le boulon d'axe (24).

11. Colonne de direction selon la revendication ou 10, **caractérisée en ce que** la partie d'absorption d'énergie (27) présente des nervures d'appui saillant latéralement (39) avec lesquelles elle s'applique sur le fond (29) du renfoncement (28).

12. Colonne de direction selon l'une quelconque des revendications 8 à 11, **caractérisée en ce que** la partie d'absorption d'énergie (27) présente des pattes de retenue (34) saillant latéralement en vue de la fixation dans le renfoncement (28), lesquelles coopèrent avec des parois latérales (32, 33) du renfoncement (28).

13. Colonne de direction selon la revendication 12, **caractérisée en ce que** les pattes de retenue (34) sont enfoncées dans les parois latérales (32, 33).

14. Procédé pour réaliser une colonne de direction selon la revendication 12 ou 13, **caractérisé en ce que** la partie d'absorption d'énergie (27) est d'abord réalisée avec des pattes de retenue (34) disposées sur des côtés opposés de la partie d'absorption d'énergie (27), lesquelles sont situées en forme de V l'une par rapport à l'autre, et **en ce qu'**après l'insertion de la partie d'absorption d'énergie (27) dans le renfoncement (28) dans l'unité de commande (4), les pattes de retenue (34) sont cintrées avec un outil de pressage (42) dans la direction d'un fond (29) du renfoncement (28), les pattes de retenue (34) s'enfonçant dans les parois latérales (32, 33) du renfoncement (28).
